# EUROPÄISCHE PATENTSCHRIFT

(11) **EP 3 720 056 B1**
(45) Veröffentlichungstag und Bekanntmachung des Hinweises auf die Patenterteilung: **22.11.2023**
(21) Anmeldenummer: 20165795.4
(22) Anmeldetag: 26.03.2020
(51) Int. Cl.: H04L 12/40

(54) **VERFAHREN UND SYSTEM ZUR PARALLELEN ECHTZEITANALYSE BEI FUNKTIONSPRÜFUNGEN VON HARDWARE UND SOFTWARE VON STEUERGERÄTEN**
METHOD AND SYSTEM FOR PARALLEL REAL-TIME ANALYSIS IN FUNCTIONAL CHECKS OF HARDWARE AND SOFTWARE OF CONTROLLERS
PROCÉDÉ ET SYSTÈME D'ANALYSE PARALLÈLE EN TEMPS RÉEL LORS DES ESSAIS FONCTIONNELS DU MATÉRIEL ET DU LOGICIEL DES APPAREILS DE COMMANDE

(30) Priorität: 01.04.2019 DE 102019204530
(43) Veröffentlichungstag der Anmeldung: 07.10.2020
(73) Patentinhaber: VOLKSWAGEN AG, 38440 Wolfsburg (DE)
(72) Erfinder: Glück, Matthias, 38176 Wendeburg (DE)

(56) Entgegenhaltungen:
- US-A1- 2009 300 420
- US-A1- 2016 163 125

## Beschreibung

Die Erfindung betrifft ein Verfahren und ein System zur parallelen Echtzeitanalyse bei Funktionsprüfungen von Hardware und Software von Steuergeräten.

US 2009/0300420 A1 offenbart ein Verfahren zum Testen wenigstens einer arithmetischen Einheit, die in einer Steuerungseinheit installiert ist.

Neuere Fahrzeugkonzepte weisen eine zunehmende Anzahl von elektrischen Komponenten und Steuergeräten auf. Mit steigender Anzahl solcher teilweise auch in zentralen Funktionen verwendeten Komponenten, insbesondere bei halb- oder vollelektrifizierten Fahrzeugen, steigt gleichermaßen die damit verbundene Komplexität an Kontrollaufgaben beziehungsweise Steuerungsaufgaben. In diesem Zusammenhang sind bereits Steuergeräte aus dem Stand der Technik bekannt, welche beispielsweise direkt für den Einsatz im automobilen Sektor entwickelt und entsprechend für einen bestimmten Zweck mit den zugehörigen Schnittstellen entworfen sind. Dabei werden Aktivitätszustände oder allgemein die Funktionsweise von diesen Steuergeräten ebenso kontrolliert, wie die zugehörigen Aufgaben und zu bewerkstelligende Aktionen, für welche ein jeweiliges Steuergerät betrieben wird. So wird etwa bei automobilen Steuergeräten ein interner Zustand mittels externer Bussysteme ausgelesen und ausgewertet. Solche externen Bussysteme, wie zum Beispiel FlexRay, CanFD, LIN oder automotive Ethernet sind dabei als bekannt anzusehen. Ebenso ihre Funktionsweise ist dabei als bekannt anzusehen. Dabei laufen diese externen Bussysteme in einem Millisekunden-Zeitraster, während moderne Mikrocontrollervorrichtungen Aufgaben in Mikrosekunden-Zeitfenstern abarbeiten. Dies führt zu Kompatibilitätsproblemen, sodass detaillierte Tests, wie sie beispielsweise beim autonomen Fahrbetrieb von teil- oder vollautomatisierten Fahrzeugen notwendig sind, nicht möglich sind.

Herkömmlicherweise werden Funktionsprüfungen von Steuergeräten beziehungsweise allgemein von Hardware in diesem technischen Gebiet an den Schnittstellen des Systems vorgenommen. Diese Tests liefern aber keinen Einblick in die Interna der Abläufe von komplexen Funktionen der Software während der Tests an sich, um zu erkennen, ob ein softwareinternes Problem vorliegt, welches im aktuellen Test zwar nicht sichtbar, aber unter seltenen Umständen doch zu einem Fehler führen kann. Insbesondere bei einem autonomen Fahrmodus sind solche Umstände nicht tragbar. In diesem Zusammenhang sind erste Überlegungen unter anderem in dem Bericht "Architecture overview for debug", publiziert von der mipi - Alliance in der Version 1.2 am 13.07.2018 einzusehen.

Der Erfindung liegt nun die Aufgabe zugrunde, ein Verfahren und ein System bereitzustellen, welche erweiterte Funktionsprüfungen von Steuergeräten für die Verwendung im Automobilbereich im Sinne einer Echtzeitanalyse ermöglichen.

In bevorzugter Ausgestaltung der Erfindung ist vorgesehen, dass ein Verfahren zur parallelen Echtzeitanalyse bei Funktionsprüfungen von Hardware und Software von Steuergeräten bereitgestellt wird. Solch ein Verfahren umfasst dabei die folgenden Schritte: Betreiben eines Steuergeräts, Übermitteln mindestens einer ersten Information von dem Steuergerät an eine erste Analysevorrichtung, Auswerten der mindestens einen ersten Information von dem Steuergerät mittels der ersten Analysevorrichtung und Erstellen eines ersten Testergebnisses und Übergeben des ersten Testergebnisses an eine Auswerteeinheit. Dabei umfasst das Verfahren zudem die folgenden weiteren Schritte: Übermitteln mindestens einer zweiten Information von dem Steuergerät an eine zweite Analysevorrichtung, wobei das Steuergerät für diese Zwecke mindestens eine Mikrocontrollervorrichtung umfasst, Auswerten der mindestens einen zweiten Information von dem Steuergerät mittels der zweiten Analysevorrichtung und Erstellen eines zweiten Testergebnisses, Übergeben des zweiten Testergebnisses an die Auswerteeinheit, Erstellen eines erweiterten Testergebnisses auf Basis des ersten und zweiten Testergebnisses mittels der Auswerteeinheit, Nutzen des erweiterten Testergebnisses für die Funktionsprüfung von Hardware und Software von dem Steuergerät.

Auf diese Weise ist es möglich, erweiterte Funktionsprüfungen von Steuergeräten für die Verwendung im Automobilbereich im Sinne einer Echtzeitanalyse zu ermöglichen. Da die Auswerteeinheit gemäß dem vorgestellten Verfahren sowohl von der ersten als auch einer zweiten Analysevorrichtung entsprechende Daten in Form von Testergebnissen für die Auswertung erhält, ist es möglich, eine Echtzeitanalyse und somit einen im Wesentlichen vollständigen aktuellen Zustand der Hardware beziehungsweise einer Betriebsweise der Software zu ermitteln, um somit entsprechend diese Ergebnisse für etwaige Kontrollvorgänge und Justiervorgänge zu verwenden. Mit anderen Worten stellt die vorgestellte Lösung einen funktionalen Test bereit, welcher bei Nutzung insbesondere der zweiten Analysevorrichtung und mittels der gekoppelten Mikrocontrollervorrichtung in Echtzeit eine Analyse auf Funktionsfehler ermöglicht. Dadurch können daraufhin erweiterte Testergebnisse bereitgestellt werden. Insbesondere kann solch eine Analyse Funktionsfehler aufdecken, welche im ersten Augenblick an externen Schnittstellen der Hardware keine Funktionsfehler zeigen, welche sich aber im Verlauf des Tests an den Schnittstellen auswirken können. Vorteilhaft kann dieses vorgestellte Verfahren beispielsweise für die Absicherung von Steuergeräten beim autonomen Fahren genutzt werden, um die Qualität der Tests ab einer Steuergerätetestebene und den höheren V-Modellebenen quantitativ zu erfassen. Mittels des vorgestellten Verfahrens ist es somit möglich, funktionale Tests mit einer sehr hohen Genauigkeit gegenüber herkömmlichen Verfahren durchzuführen. Dabei kann eine Echtzeitanalyse bereitgestellt werden, sodass die Auswerteeinheit Zustände im Wesentlichen vollständig und sehr zeitnah übermittelt bekommt. Somit lässt sich die Qualität von Steuergerätetests wesentlich erhöhen, sodass insbesondere in sensiblen Einsatzgebieten, wie beispielsweise dem autonomen Fahren, ein zuverlässiger und besonders sicherer Betrieb ermöglicht wird.

In weiterer bevorzugter Ausgestaltung der Erfindung ist vorgesehen, dass ein System zur parallelen Echtzeitanalyse bei Funktionsprüfungen von Hardware und Software von Steuergeräten bereitgestellt wird. Solch ein System umfasst dabei zumindest eine Mikrocontrollervorrichtung, welche mit einem zu analysierenden Steuergerät gekoppelt ist, ein Bussystem und ein mit diesem Bussystem gekoppeltem Messmittel, wobei das Bussystem und das Messmittel mit dem zu analysierenden Steuergerät gekoppelt sind und ausgelegt sind mindestens eine erste Information von dem Steuergerät entgegenzunehmen, um ein erstes Testergebnis zu erstellen, ein Trace Computer Cluster, welches mit der einen Mikrocontrollervorrichtung gekoppelt ist und ausgelegt ist mindestens eine zweite Information von dem Steuergerät entgegenzunehmen, um ein zweites Testergebnis zu erstellen, eine Auswerteeinheit, welche ausgelegt ist sowohl das Trace Computer Cluster als auch das Messmittel zu steuern und das erste und zweite Testergebnis entgegenzunehmen, um ein erweitertes Testergebnis zu erstellen, wobei die Auswerteeinheit ferner ausgelegt ist das erweiterte Testergebnis für eine Funktionsprüfung von Hardware und Software von dem Steuergerät zu verwenden. Die zuvor genannten Vorteile gelten soweit übertragbar auch für das vorgestellte System.

In weiterer bevorzugter Ausgestaltung der Erfindung ist vorgesehen, dass eine Verwendung von dem vorgestellten Verfahren gemäß Ansprüchen 1 bis 9 in einem System gemäß den Ansprüchen 10 bis 13 bereitgestellt wird. Die zuvor genannten Vorteile gelten soweit übertragbar auch für die vorgestellte Verwendung.

In weiterer bevorzugter Ausgestaltung der Erfindung ist vorgesehen, dass ein Fahrzeug mit zumindest einem System gemäß den Ansprüchen 10 bis 13 bereitgestellt wird. Die zuvor genannten Vorteile gelten soweit übertragbar auch für das vorgestellte Fahrzeug.

Weitere bevorzugte Ausgestaltungen der Erfindung ergeben sich aus den übrigen, in den Unteransprüchen genannten Merkmalen.

Die erste Analysevorrichtung umfasst zumindest ein Bussystem und ein zumindest ein Messmittel, wobei das Bussystem und das Messmittel mit dem Steuergerät gekoppelt sind und ausgelegt sind, die mindestens erste Information von dem Steuergerät entgegen zu nehmen, um das erste Testergebnis zu erstellen. Somit können die standardmäßig erhobenen Daten zusätzlich an den Schnittstellen des Systems erhoben werden, um gemäß dem vorgestellten Verfahren aus unterschiedlichen Datenerhebungsquellen letztlich ein erweitertes Testergebnis zu generieren. Die zuvor genannten Vorteile sind somit noch besser zu erreichen.

Die zweite Analysevorrichtung umfasst ein Trace Computer Cluster, der mit der Mikrocontrollervorrichtung gekoppelt ist und ausgelegt ist, die mindestens zweite Information von dem Steuergerät entgegen zu nehmen, um das zweite Testergebnis zu erstellen. Die zuvor genannten Vorteile sind somit noch besser zu erreichen. Insbesondere lässt sich somit eine Kopplung zur Mikrocontrollervorrichtung besonders gut erstellen, um die zuvor erwähnte Echtzeitanalyse durchführen zu können.

Ferner ist in einer weiteren bevorzugten Ausgestaltung der Erfindung vorgesehen, dass die Auswerteeinheit ausgelegt ist sowohl das Trace Computer Cluster als auch das Messmittel zu steuern. Insofern wird die Auswerteeinheit, welche auch als Prüfplatzsteuerrechner beziehungsweise Testautomatisierungsrechner bezeichnet werden kann, als Master in dem System zum Prüfablauf eingesetzt und nimmt auf diese Weise die funktionalen Testergebnisse von den zwei Analysevorrichtungen entgegen. Dazu läuft ein entsprechendes Prüfprogramm auf der Auswerteinheit ab, welches letztendlich die erweiterten Testergebnisse liefert. Die zuvor genannten Vorteile lassen sich somit noch besser erreichen. Dabei versteht sich, dass die Auswerteeinheit ebenso ausgelegt ist, eine erste und zweite Analysevorrichtung zu steuern und somit auch jegliche Alternativen von diesen Analysevorrichtungen im Sinne des vorgestellten Verfahrens einbinden kann.

Zudem ist in einer weiteren bevorzugten Ausgestaltung der Erfindung vorgesehen, dass das Bussystem ausgewählt ist aus: FlexRay, CanFD, LIN, automotive Ethernet und das Messmittel ausgewählt ist aus: Busanalyzer, Oszilloskop, Logic Analyzer. Die Verwendung von bereits etablierten Komponenten auf diesem technischen Gebiet erleichtert die Umsetzung des vorgestellten Verfahrens, sodass erweiterte Funktionsprüfungen von Steuergeräten für die Verwendung im Automobilbereich im Sinne einer Echtzeitanalyse besonders effizient ermöglicht werden.

Des Weiteren ist in einer weiteren bevorzugten Ausgestaltung der Erfindung vorgesehen, dass das Übermitteln der mindestens einen zweiten Information über eine Trace Schnittstelle vollzogen wird. Die zuvor genannten Vorteile lassen sich somit noch besser erreichen.

Auch ist in einer weiteren bevorzugten Ausgestaltung der Erfindung vorgesehen, dass die Trace Schnittstelle eine High-Speed-Datenverbindung umfasst und/oder mit einer High-Speed-Datenverbindung verbindbar ist. Die zuvor genannten Vorteile lassen sich somit noch besser erreichen.

Ferner ist in einer weiteren bevorzugten Ausgestaltung der Erfindung vorgesehen, dass die zumindest eine zweite Information ausgewählt wird aus: Programmflussinformationen, Dateninhalte in internen Speichern, Variablen, Prozessorstruktur. Neben der eigentlichen Datenanalyse können also zudem Programmflussdaten genutzt werden, um nachzuweisen, dass keine ungewollten Programmaufrufe, Verzweigungen, Unterbrechungen von Tasks vorhanden sind beziehungsweise momentan durchgeführt werden. Auch diese Merkmale können somit genutzt werden um ein FAIL seitens der zweiten Analysevorrichtung in Form des Trace Computer Clusters auszulösen.

Zudem ist in einer weiteren bevorzugten Ausgestaltung der Erfindung vorgesehen, dass das Auswerten der mindestens einen zweiten Information von dem Steuergerät mittels des Trace Computer Clusters erfolgt, wobei das Trace Computer Cluster Signaturen umfasst, sodass aus den Daten der mindestens einen zweiten Information Pass/Fail-Kriterien ermittelt und als Teil des zweiten Testergebnisses bereitgestellt werden. Die zuvor genannten Vorteile lassen sich somit noch besser erreichen.

Des Weiteren ist in einer weiteren bevorzugten Ausgestaltung der Erfindung vorgesehen, dass in dem vorgestellten System das Bussystem ausgewählt ist aus: FlexRay, CanFD, LIN, automotive Ethernet und das Messmittel ausgewählt ist aus: Busanalyzer, Oszilloskop, Logic Analyzer. Die Verwendung von bereits etablierten Komponenten auf diesem technischen Gebiet erleichtert die Umsetzung des vorgestellten Verfahrens, sodass erweiterte Funktionsprüfungen von Steuergeräten für die Verwendung im Automobilbereich im Sinne einer Echtzeitanalyse besonders effizient ermöglicht werden.

Auch ist in einer weiteren bevorzugten Ausgestaltung der Erfindung vorgesehen, dass in dem vorgestellten System das Übermitteln der mindestens einen zweiten Information über eine Trace Schnittstelle vollzogen wird, wobei die Trace Schnittstelle eine High-Speed-Datenverbindung umfasst und/oder mit einer High-Speed-Datenverbindung verbindbar ist. Die zuvor genannten Vorteile gelten soweit übertragbar auch für diese spezielle Variante des vorgestellten Systems.

Schlussendlich ist in einer weiteren bevorzugten Ausgestaltung der Erfindung vorgesehen, dass in dem vorgestellten System die zumindest eine zweite Information ausgewählt wird aus: Programmflussinformationen, Dateninhalte in internen Speichern, Variablen, Prozessorstruktur. Die zuvor genannten Vorteile gelten soweit übertragbar auch für diese spezielle Variante des vorgestellten Systems.

Angewendet werden kann das Verfahren sowie das System wie bereits gesagt beispielsweise bei Absicherungen von Steuergeräten für autonomes Fahren, um die Qualität der Tests ab Steuergerätetestebene und den höheren V-Modellebenen quantitativ zu erfassen. Dabei können die vorgestellten Lösungen in allen Steuergerätetests verwendet und implementiert werden. In diesem Zusammenhang lässt sich eine Anwendung bei alle hardwarebasierten Funktionstests auf denen eine Software läuft vorstellen. Neben dem Einsatzgebiet in der Automobilindustrie ist es vorstellbar, dass ebenso eine Anwendung in der Flugzeugindustrie, in der Medizintechnik oder in der Computerindustrie vorgesehen ist. Es ist somit vorstellbar, dass das Verfahren und das System bei Steuergeräten für die Verwendung in jeglichen Fahrzeugen eingesetzt wird. Darüber hinaus kann eine Anwendung auch auf Prüfständen und/oder Tischprüfplätze vorgesehen werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Flussdiagramm von einem Verfahren zur parallelen Echtzeitanalyse bei Funktionsprüfungen von Hardware und Software von Steuergeräten;
- Figur 2: einen schematischen Aufbau von einem System zur parallelen Echtzeitanalyse bei Funktionsprüfungen von Hardware und Software von Steuergeräten;
- Figur 3: ein Diagramm mit aufgetragenen Testergebnissen von einem Verfahren zur parallelen Echtzeitanalyse bei Funktionsprüfungen von Hardware und Software von Steuergeräten;
- Figur 4: ein Fahrzeug mit einem System zur parallelen Echtzeitanalyse bei Funktionsprüfungen von Hardware und Software von Steuergeräten.

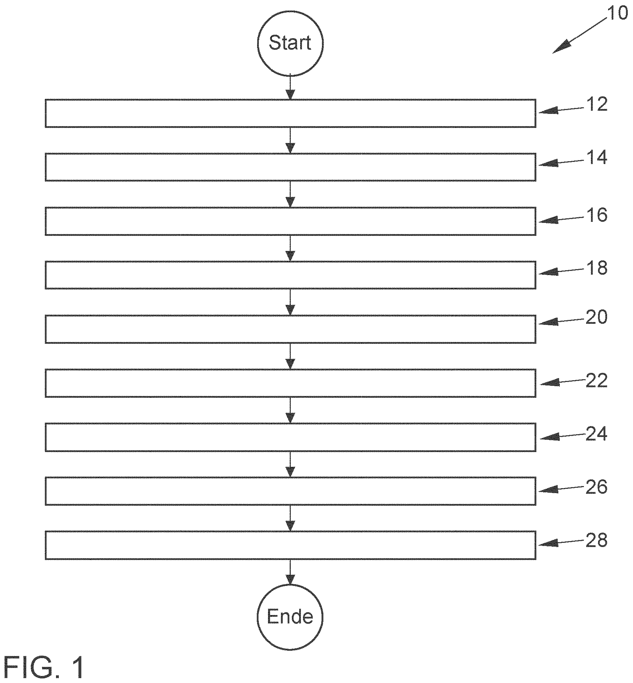

Figur 1 zeigt ein Flussdiagramm 10 von einem Verfahren zur parallelen Echtzeitanalyse bei Funktionsprüfungen von Hardware und Software von Steuergeräten 32. In einem ersten Schritt 12 wird ein Steuergerät 32 betrieben. In einem zweiten Schritt 14 wird mindestens eine erste Information von dem Steuergerät 32 an eine erste Analysevorrichtung 39 übermittelt. In einem dritten Schritt 16 wird die mindestens eine erste Information von dem Steuergerät 32 mittels der ersten Analysevorrichtung 39 ausgewertet und es wird ein erstes Testergebnis erstellt. In einem vierten Schritt 18 wird das erste Testergebnis an eine Auswerteeinheit 46 übergeben. In einem fünften Schritt 20 wird mindestens eine zweite Information von dem Steuergerät 32 an eine zweite Analysevorrichtung 43 übermittelt, wobei das Steuergerät 32 für diese Zwecke mindestens eine Mikrocontrollervorrichtung 34 umfasst. In einem sechsten Schritt 22 wird die mindestens eine zweite Information von dem Steuergerät 32 mittels der zweiten Analysevorrichtung 43 ausgewertet und es wird ein zweites Testergebnis erstellt. In einem siebten Schritt 24 wird das zweite Testergebnis an die Auswerteeinheit 46 übergeben. In einem achten Schritt 26 wird ein erweitertes Testergebnis auf Basis des ersten und zweiten Testergebnisses mittels der Auswerteeinheit 46 erstellt. In einem neunten Schritt 28 wird das erweiterte Testergebnis für die Funktionsprüfung von Hardware und Software von dem Steuergerät 32 genutzt.

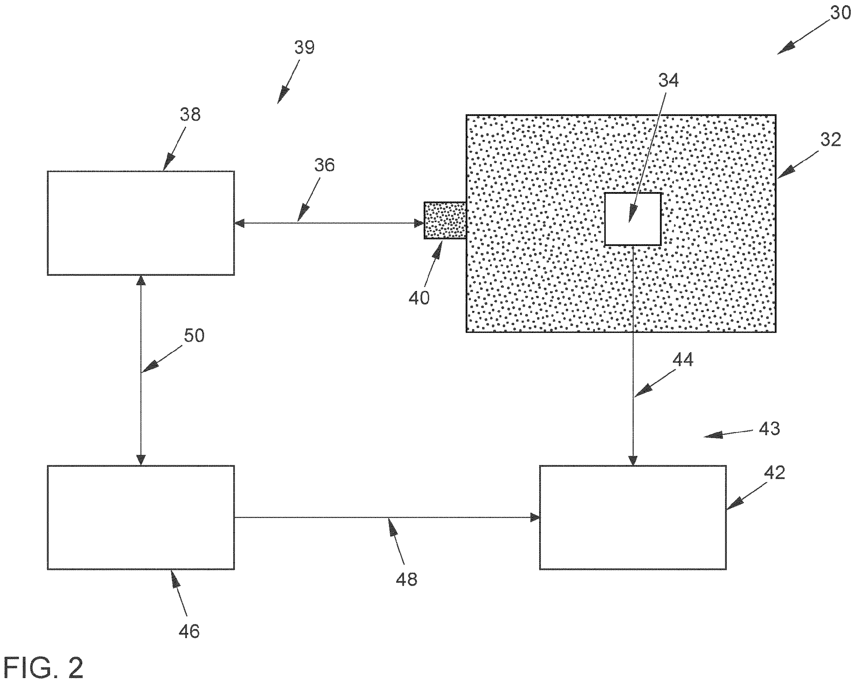

Figur 2 zeigt einen schematischen Aufbau von einem System 30 zur parallelen Echtzeitanalyse bei Funktionsprüfungen von Hardware und Software von Steuergeräten 32. Auf einem zu analysierenden Steuergerät 32 ist eine Mikrocontrollervorrichtung 34 angeordnet. Dieser Mikrocontrollervorrichtung 34 ist mit dem Steuergerät 32 gekoppelt. Zudem ist ein Bussystem 36 dargestellt und ein mit diesem Bussystem 36 gekoppeltem Messmittel 38. Das Bussystem 36 mit dem gekoppeltem Messmittel 38 können zusammen auch als erste Analysevorrichtung 39 bezeichnet werden. Insofern ist auch das Steuergerät 32 über dieses Bussystem 36 mit diesem Messmittel 38 gekoppelt. Das Bussystem 36 und das Messmittel 38 sind ausgelegt mindestens eine erste Information von dem Steuergerät 32 entgegen zu nehmen, um ein erstes Testergebnis zu erstellen. In diesem Ausführungsbeispiel ist zwischen dem Bussystem 36 und dem Steuergerät 32 zudem ein Port 40 zwischengeschaltet. Des Weiteren ist unterhalb des Steuergeräts 32 ein Trace Computer Cluster 42 dargestellt, welches mit der Mikrocontrollervorrichtung 34 gekoppelt ist und ausgelegt ist mindestens eine zweite Information mittels der Mikrocontrollervorrichtung 34 von dem Steuergerät 32 entgegen zu nehmen, um ein zweites Testergebnis zu erstellen. Das Trace Computer Cluster 42 kann auch als zweite Analysevorrichtung 43 bezeichnet werden. Dabei ist die Mikrocontrollervorrichtung 34 mit dem Trace Computer Cluster 42 über eine Trace Schnittstelle 44 verbunden, wobei die Trace Schnittstelle 44 beispielsweise eine High-Speed-Datenverbindung umfassen kann und/oder mit einer High-Speed-Datenverbindung verbindbar ist. Zudem ist eine Auswerteeinheit 46 dargestellt. Diese Auswerteeinheit 46 kann auch als Testautomatisierungsrechner für den Prüfplatz bezeichnet werden. Diese Auswerteeinheit 46 ist dabei ausgelegt sowohl das Trace Computer Cluster 42 als auch das Messmittel 38 zu steuern und das erste und zweite Testergebnis entgegen zu nehmen, um ein erweitertes Testergebnis zu erstellen. Die Kopplung von der Auswerteeinheit 46 zu dem Trace Computer Cluster 42 ist dabei mit einer ersten Verbindungsleitung 48 dargestellt und die Kopplung von der Auswerteeinheit 46 zu dem Messmittel 38 ist mit einer zweiten Verbindungsleitung 50 dargestellt. Die Auswerteeinheit 46 ist ferner ausgelegt das erweiterte Testergebnis für eine Funktionsprüfung von Hardware und Software von dem Steuergerät 32 zu verwenden.

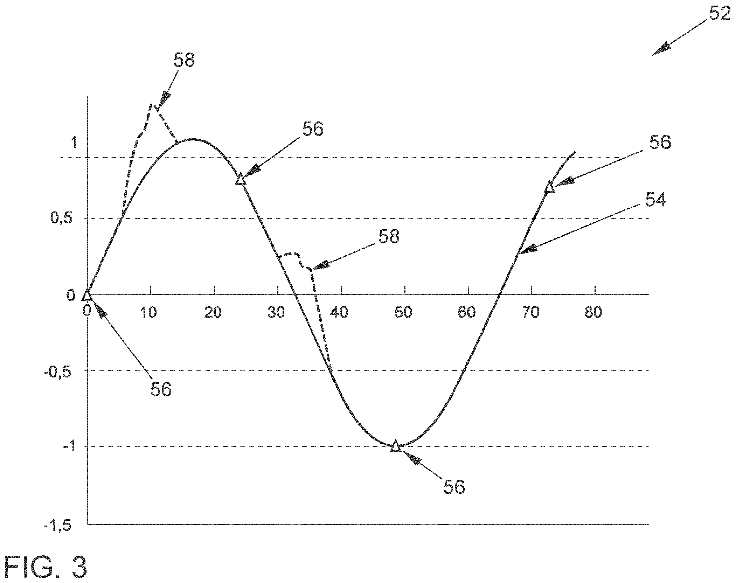

Figur 3 zeigt ein Diagramm 52 mit aufgetragenen Testergebnissen von einem Verfahren zur parallelen Echtzeitanalyse bei Funktionsprüfungen von Hardware und Software von Steuergeräten 32. In diesem speziellen Beispiel handelt es sich um ein Steuergerät 32, welches ein Moment für einen nicht näher gezeigten Motor abbildet. Dabei soll auf dem Bussystem 36 geprüft werden, inwiefern das Moment angenommen wurde. Dabei zeigt die durchgehende Kurve 54 das zu stellende Moment durch eine entsprechende Software als Sollkurve. Das Sollmoment auf dem Bussystem 36 ergibt sich durch die Abtastung der Sollkurve, dargestellt durch die einzelnen Dreieckssymbole 56. Abweichend von der durchgehenden Kurve 54 ist ausschnittsweise eine reelle Kurve 58 dargestellt, welche das wirklich gestellte Moment des Steuergeräts 32 zeigt. In einem funktionalen Test würde beim alleinigen Schauen auf die Werte durch Abtastung mittels des Bussystems 36 kein Fehler bemerkt werden, da die Dreieckssymbole 56 in der Toleranzkurve der Sollkurve (gleichzusetzen mit Sollmoment) liegen. Bei einem sogenannten klassischen Test würde das Ergebnis somit ein PASS verzeichnen beziehungsweise sein. Im Gegensatz dazu würde es bei einer Nutzung der zweiten Analysevorrichtung 43 beispielsweise in Form des Trace Computer Cluster 42 mit der entsprechenden Trace Schnittstelle 44 möglich sein, die Punkte und Stellwerte der reellen Kurve 58 zu sehen und mittels Toleranzverfahren den Testfall zu FAIL bringen. Die reelle Kurve 58 kann zu haptischen als auch zu funktionalen Auffälligkeiten führen.

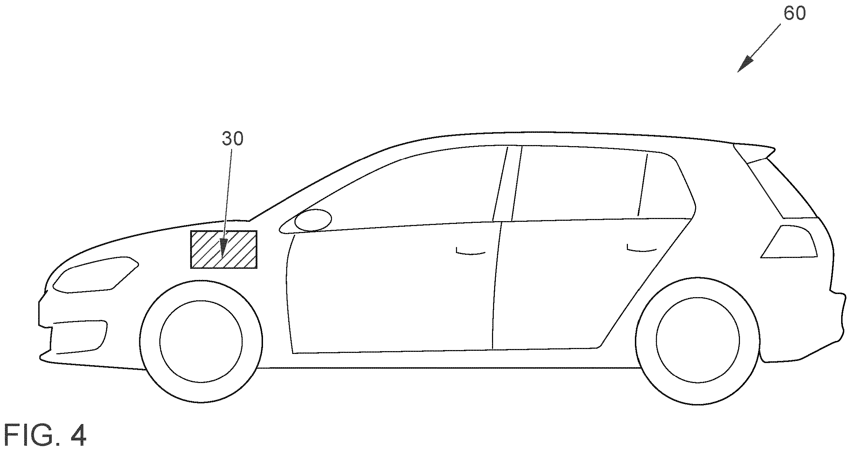

Figur 4 zeigt ein Fahrzeug 60 mit einem System 30 zur parallelen Echtzeitanalyse bei Funktionsprüfungen von Hardware und Software von Steuergeräten 32.

### Bezugszeichenliste

- 10: Flussdiagramm
- 12: erster Schritt
- 14: zweiter Schritt
- 16: dritter Schritt
- 18: vierter Schritt
- 20: fünfter Schritt
- 22: sechster Schritt
- 24: siebter Schritt
- 26: achter Schritt
- 28: neunter Schritt
- 30: System
- 32: Steuergerät
- 34: Mikrocontrollervorrichtung
- 36: Bussystem
- 38: Messmittel
- 39: erste Analysevorrichtung
- 40: Port
- 42: Trace Computer Cluster
- 43: zweite Analysevorrichtung
- 44: Trace Schnittstelle
- 46: Auswerteeinheit
- 48: erste Verbindungsleitung
- 50: zweite Verbindungsleitung
- 52: Diagramm
- 54: Sollkurve
- 56: Dreiecksymbol
- 58: reelle Kurve
- 60: Fahrzeug

## Patentansprüche

1. Verfahren zur parallelen Echtzeitanalyse bei Funktionsprüfungen von Hardware und Software von Steuergeräten (32) umfassend die folgenden Schritte:
• Betreiben eines Steuergeräts (32);
• Übermitteln mindestens einer ersten Information von dem Steuergerät (32) an eine erste Analysevorrichtung (39);
• Auswerten der mindestens einen ersten Information von dem Steuergerät (32) mittels der ersten Analysevorrichtung (39) und Erstellen eines ersten Testergebnisses;
• Übergeben des ersten Testergebnis an eine Auswerteeinheit (46), **dadurch gekennzeichnet, dass** das Verfahren folgende weitere Schritte umfasst:
• Übermitteln mindestens einer zweiten Information von dem Steuergerät (32) an eine zweite Analysevorrichtung (43), wobei das Steuergerät (32) für diese Zwecke mindestens eine Mikrocontrollervorrichtung (34) umfasst;
• Auswerten der mindestens einen zweiten Information von dem Steuergerät (32) mittels der zweiten Analysevorrichtung (43) und Erstellen eines zweiten Testergebnisses;
• Übergeben des zweiten Testergebnisses an die Auswerteeinheit (46);
• Erstellen eines erweiterten Testergebnisses auf Basis des ersten und zweiten Testergebnisses mittels der Auswerteeinheit (46);
• Nutzen des erweiterten Testergebnisses für die Funktionsprüfung von Hardware und Software von dem Steuergerät (32), wobei die erste Analysevorrichtung (39) zumindest ein Bussystem (36) und zumindest ein Messmittel (38) umfasst, wobei das Bussystem (36) und das Messmittel (38) mit dem Steuergerät (32) gekoppelt sind und ausgelegt sind, die mindestens erste Information von dem Steuergerät (32) entgegen zu nehmen, um das erste Testergebnis zu erstellen, und wobei die zweite Analysevorrichtung (43) ein Trace Computer Cluster (42) umfasst, der mit der Mikrocontrollervorrichtung (34) gekoppelt ist und ausgelegt ist, die mindestens zweite Information von dem Steuergerät (32) entgegen zu nehmen, um das zweite Testergebnis zu erstellen.

2. Verfahren nach Anspruch 1, wobei die Auswerteeinheit (46) ausgelegt ist sowohl das Trace Computer Cluster (42) als auch das Messmittel (38) zu steuern.

3. Verfahren nach einem der vorherigen Ansprüche, wobei das Bussystem (36) ausgewählt ist aus: FlexRay, CanFD, LIN, automotive Ethernet und das Messmittel (38) ausgewählt ist aus: Busanalyzer, Oszilloskop, Logic Analyzer.

4. Verfahren nach einem der vorherigen Ansprüche, wobei das Übermitteln der mindestens einen zweiten Information über eine Trace Schnittstelle (44) vollzogen wird.

5. Verfahren nach Anspruch 4, wobei die Trace Schnittstelle (44) eine High-Speed-Datenverbindung umfasst und/oder mit einer High-Speed-Datenverbindung verbindbar ist.

6. Verfahren nach einem der vorherigen Ansprüche, wobei die zumindest eine zweite Information ausgewählt wird aus: Programmflussinformationen, Dateninhalte in internen Speichern, Variablen, Prozessorstruktur.

7. Verfahren nach einem der vorherigen Ansprüche, wobei das Auswerten der mindestens einen zweiten Information von dem Steuergerät (32) mittels des Trace Computer Clusters (42) erfolgt, wobei das Trace Computer Cluster (42) Signaturen umfasst, sodass aus den Daten der mindestens einen zweiten Information Pass/Fail-Kriterien ermittelt und als Teil des zweiten Testergebnisses bereitgestellt werden.

8. System (30) zur parallelen Echtzeitanalyse bei Funktionsprüfungen von Hardware und Software von Steuergeräten (32) umfassend
• zumindest eine Mikrocontrollervorrichtung (34), welche mit einem zu analysierenden Steuergerät (32) gekoppelt ist;
• eine erste Analysevorrichtung (39) mit einem Bussystem und einem mit diesem Bussystem (36) gekoppeltem Messmittel (38), wobei das Bussystem (36) und das Messmittel (38) mit dem zu analysierenden Steuergerät (32) gekoppelt sind und ausgelegt sind mindestens eine erste Information von dem Steuergerät (32) entgegen zu nehmen, um ein erstes Testergebnis zu erstellen; **gekennzeichnet durch**
• eine zweite Analysevorrichtung (43) mit einem Trace Computer Cluster (42), welches mit der Mikrocontrollervorrichtung (32) gekoppelt ist und ausgelegt ist, mindestens eine zweite Information von dem Steuergerät (32) entgegen zu nehmen, um ein zweites Testergebnis zu erstellen;
• eine Auswerteeinheit (46), welche ausgelegt ist sowohl das Trace Computer Cluster (42) als auch das Messmittel (38) zu steuern und das erste und zweite Testergebnis entgegen zu nehmen, um ein erweitertes Testergebnis zu erstellen, wobei die Auswerteeinheit (46) ferner ausgelegt ist das erweiterte Testergebnis für eine Funktionsprüfung von Hardware und Software von dem Steuergerät (32) zu verwenden.

9. System (30) nach Anspruch 8, wobei das Bussystem (36) ausgewählt ist aus: FlexRay, CanFD, LIN, automotive Ethernet und das Messmittel (38) ausgewählt ist aus: Busanalyzer, Oszilloskop, Logic Analyzer.

10. System (30) nach einem der vorherigen Ansprüche 8 bis 9, wobei das Übermitteln der mindestens einen zweiten Information über eine Trace Schnittstelle (44) vollzogen wird, wobei die Trace Schnittstelle (44) eine High-Speed-Datenverbindung umfasst und/oder mit einer High-Speed-Datenverbindung verbindbar ist.

11. System (30) nach einem der vorherigen Ansprüche 8 bis 10, wobei die zumindest eine zweite Information ausgewählt wird aus: Programmflussinformationen, Dateninhalte in internen Speichern, Variablen, Prozessorstruktur.

12. Fahrzeug (60) mit zumindest einem System (30) gemäß einem der Ansprüche 8 bis 11.

## Claims

1. Method for parallel real-time analysis in functional tests of hardware and software of control devices (32), comprising the following steps:
• operating a control device (32);
• transmitting at least one first piece of information from the control device (32) to a first analysis device (39);
• evaluating the at least one first piece of information from the control device (32) by means of the first analysis device (39) and creating a first test result;
• transferring the first test result to an evaluation unit (46),
**characterized in that** the method comprises the following additional steps:
• transmitting at least one second piece of information from the control device (32) to a second analysis device (43), the control device (32) comprising at least one microcontroller device (34) for this purpose;
• evaluating the at least one second piece of information from the control device (32) by means of the second analysis device (43) and creating a second test result;
• transmitting the second test result to the evaluation unit (46);
• creating an expanded test result on the basis of the first and second test result by means of the evaluation unit (46);
• using the expanded test result for the functional testing of hardware and software of the control device (32), the first analysis device (39) comprising at least one bus system (36) and at least one measuring means (38), the bus system (36) and the measuring means (38) being coupled to the control device (32) and being designed to receive the at least first piece of information from the control device (32) in order to create the first test result, and the second analysis device (43) comprising a trace computer cluster (42), which is coupled to the microcontroller device (34) and is designed to receive the at least second piece of information from the control device (32) in order to create the second test result.

2. Method according to claim 1, wherein the evaluation unit (46) is designed to control both the trace computer cluster (42) and the measuring means (38).

3. Method according to any of the preceding claims, wherein the bus system (36) is selected from: FlexRay, CanFD, LIN, automotive Ethernet; and the measuring means (38) is selected from: bus analyzer, oscilloscope, logic analyzer.

4. Method according to any of the preceding claims, wherein the transmission of the at least one second piece of information is performed via a trace interface (44).

5. Method according to claim 4, wherein the trace interface (44) comprises a high-speed data connection and/or can be connected to a high-speed data connection.

6. Method according to any of the preceding claims, wherein the at least one second piece of information is selected from: program flow information, data contents in internal memories, variables, processor structure.

7. Method according to any of the preceding claims, wherein the evaluation of the at least one second piece of information from the control device (32) is carried out by means of the trace computer cluster (42), wherein the trace computer cluster (42) comprises signatures so that pass/fail criteria are determined from the data of the at least one second piece of information and are provided as part of the second test result.

8. System (30) for parallel real-time analysis in functional tests of hardware and software of control devices (32), comprising
• at least one microcontroller device (34), which is coupled to a control device (32) to be analyzed;
• a first analysis device (39) having a bus system and a measuring means (38) coupled to this bus system (36), the bus system (36) and the measuring means (38) being coupled to the control device (32) to be analyzed and being designed to receive at least one first piece of information from the control device (32) in order to create a first test result; **characterized by**
• a second analysis device (43) having a trace computer cluster (42), which is coupled to the microcontroller device (32) and is designed to receive at least one second piece of information from the control device (32) in order to create a second test result;
• an evaluation unit (46), which is designed to control both the trace computer cluster (42) and the measuring means (38), and to receive the first and second test result in order to create an expanded test result, the evaluation unit (46) being further designed to use the expanded test result for functional testing of hardware and software of the control device (32).

9. System (30) according to claim 8, wherein the bus system (36) is selected from: FlexRay, CanFD, LIN, automotive Ethernet; and the measuring means (38) is selected from: bus analyzer, oscilloscope, logic analyzer.

10. System (30) according to any of the preceding claims 8 to 9, wherein the transmission of the at least one second piece of information is carried out via a trace interface (44), wherein the trace interface (44) comprises a high-speed data connection and/or can be connected to a high-speed data connection.

11. System (30) according to any of the preceding claims 8 to 10, wherein the at least one second piece of information is selected from: program flow Information, data contents in internal memories, variables, processor structure.

12. Vehicle (60) comprising at least one system (30) according to any of claims 8 to 11.

## Revendications

1. Procédé d'analyse en temps réel parallèle pour des vérifications de fonctionnement de matériel et de logiciel d'appareils de commande (32) comprenant les étapes suivantes :
• exploitation d'un appareil de commande (32) ;
• transmission d'au moins une première information de l'appareil de commande (32) à un premier dispositif d'analyse (39) ;
• évaluation de l'au moins une première information de l'appareil de commande (32) à l'aide du premier dispositif d'analyse (39) et création d'un premier résultat de test ;
• transfert du premier résultat de test à une unité d'évaluation (46), **caractérisé en ce que** le procédé comprend les étapes suivantes supplémentaires :
• transmission d'au moins une seconde information de l'appareil de commande (32) à un second dispositif d'analyse (43), dans lequel l'appareil de commande (32) comprend dans ce but au moins un dispositif de microcontrôleur (34) ;
• évaluation de l'au moins une seconde information de l'appareil de commande (32) à l'aide du second dispositif d'analyse (43) et création d'un second résultat de test ;
• transfert du second résultat de test à l'unité d'évaluation (46) ;
• création d'un résultat de test élargi sur la base des premier et second résultats de test à l'aide de l'unité d'évaluation (46) ;
• utilisation du résultat de test élargi pour la vérification de fonctionnement de matériel et logiciel de l'appareil de commande (32), dans lequel le premier dispositif d'analyse (39) comprend au moins un système de bus (36) et au moins un moyen de mesure (38), dans lequel le système de bus (36) et le moyen de mesure (38) sont accouplés à l'appareil de commande (32) et sont conçus pour recevoir l'au moins une première information de l'appareil de commande (32), pour créer le premier résultat de test et dans lequel le second dispositif d'analyse (43) comprend un groupe d'ordinateurs de traçage (42), qui est couplé au dispositif de microcontrôleur (34) et est conçu pour recevoir l'au moins une seconde information de l'appareil de commande (32) pour créer le second résultat de test.

2. Procédé selon la revendication 1, dans lequel l'unité d'évaluation (46) est conçue pour commander aussi bien le groupe d'ordinateurs de traçage (42) que le moyen de mesure (38).

3. Procédé selon l'une quelconque des revendications précédentes, dans lequel le système de bus (36) est choisi parmi : FlexRay, CanFD, LIN, Ethernet automobile et le moyen de mesure (38) est choisi parmi : analyseur de bus, oscilloscope, analyseur logique.

4. Procédé selon l'une quelconque des revendications précédentes, dans lequel la transmission de l'au moins une seconde information est accomplie par l'intermédiaire d'une interface de traçage (44).

5. Procédé selon la revendication 4, dans lequel l'interface de traçage (44) comprend une connexion de données à grande vitesse et/ou peut être reliée à une connexion de données à grande vitesse.

6. Procédé selon l'une quelconque des revendications précédentes, dans lequel l'au moins une seconde information est choisie parmi : informations de flux de programme, contenu de données dans les mémoires internes, variables, structure du processeur.

7. Procédé selon l'une quelconque des revendications précédentes, dans lequel l'évaluation de l'au moins une seconde information de l'appareil de commande (32) est effectuée à l'aide du groupe d'ordinateurs de traçage (42), dans lequel le groupe d'ordinateurs de traçage (42) comprend des signatures, de manière à déterminer à partir des données de l'au moins une seconde information des critères de réussite/d'échec et à les fournir en tant que partie du second résultat de test.

8. Système (30) d'analyse en temps réel parallèle pour des vérifications de fonctionnement de matériel et de logiciel d'appareils de commande (32) comprenant
• au moins un dispositif de microcontrôleur (34), lequel est couplé à un appareil de commande (32) à analyser ;
• un premier dispositif d'analyse (39) comportant un système de bus et un moyen de mesure (38) couplé à ce système de bus (36), dans lequel le système de bus (36) et le moyen de mesure (38) sont couplés à l'appareil de commande (32) à analyser et sont conçus pour recevoir au moins une première information de l'appareil de commande (32), pour créer un premier résultat de test ; **caractérisé par**
• un second dispositif d'analyse (43) comportant un groupe d'ordinateurs de traçage (42), lequel est couplé au dispositif de microcontrôleur (32) et est conçu pour recevoir au moins une seconde information de l'appareil de commande (32) pour créer un second résultat de test ;
• une unité d'évaluation (46), laquelle est conçue pour commander aussi bien le groupe d'ordinateurs de traçage (42) que le moyen de mesure (38) et pour recevoir les premier et second résultats de test pour créer un résultat de test élargi, dans lequel l'unité d'évaluation (46) est en outre conçue pour utiliser le résultat de test élargi pour une vérification de fonctionnement de matériel et logiciel de l'appareil de commande (32).

9. Système (30) selon la revendication 8, dans lequel le système de bus (36) est choisi parmi : FlexRay, CanFD, LIN, Ethernet automobile et le moyen de mesure (38) est choisi parmi : analyseur de bus, oscilloscope, analyseur logique.

10. Système (30) selon l'une des revendications précédentes 8 à 9, dans lequel la transmission de l'au moins une seconde information est accomplie par l'intermédiaire d'une interface de traçage (44), dans lequel l'interface de traçage (44) comprend une connexion de données à grande vitesse et/ou peut être reliée à une connexion de données à grande vitesse.

11. Système (30) selon l'une des revendications précédentes 8 à 10, dans lequel l'au moins une seconde information est choisie parmi : informations de flux de programme, contenu de données dans les mémoires internes, variables, structure du processeur.

12. Véhicule (60) comportant au moins un système (30) selon l'une des revendications 8 à 11.
